(19) Europäisches Patentamt / European Patent Office / Office européen des brevets

(11) **EP 4 600 604 B1**

(12) **EUROPEAN PATENT SPECIFICATION**

(45) Date of publication and mention
of the grant of the patent:
**21.01.2026 Bulletin 2026/04**

(21) Application number: **24209569.3**

(22) Date of filing: **29.10.2024**

(51) International Patent Classification (IPC):
**G01B 11/24** *(2006.01)*  **G01B 21/04** *(2006.01)*
**B21B 38/00** *(2006.01)*  **G06T 7/00** *(2017.01)*

(52) Cooperative Patent Classification (CPC):
**G01B 11/24; G01B 21/045; B21B 38/02**

(54) **STRIP SHAPE DETECTING DEVICE FOR METAL STRIP, ROLLING MILL, AND DETECTING METHOD**

BANDFORMERKENNUNGSVORRICHTUNG FÜR METALLBAND, WALZWERK UND ERKENNUNGSVERFAHREN

DISPOSITIF DE DÉTECTION DE FORME DE BANDE POUR BANDE MÉTALLIQUE, LAMINOIR ET PROCÉDÉ DE DÉTECTION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **07.02.2024 JP 2024017154**

(43) Date of publication of application:
**13.08.2025 Bulletin 2025/33**

(73) Proprietor: **Primetals Technologies Japan, Ltd.**
**Hiroshima-shi, Hiroshima 733-8553 (JP)**

(72) Inventors:
• **MOCHIZUKI, Chitoshi**
**Hiroshima, 733-8553 (JP)**
• **KANEMORI, Shinya**
**Tokyo, 100-8332 (JP)**

(74) Representative: **Strehl & Partner mbB**
**Maximilianstrasse 54**
**80538 München (DE)**

(56) References cited:
**EP-A1- 3 995 222    EP-A1- 4 231 232**

**Description**

BACKGROUND OF THE INVENTION

1. Field of the Invention

The present invention relates to a strip shape detecting device for a metal strip, a rolling mill, and a detecting method.

2. Description of the Related Art

Japanese Patent No. 6808888 describes a failure determining device and a failure determining method that can readily determine a failure in a strip surface shape of a metal strip without using a special light source such as a rod-shaped light source, the failure determining device including: a roll that is installed with a rotational axis thereof extending in the width direction of a rolled steel strip, and raises the rolled steel strip upward; a camera for photographing an image including a raised area of the rolled steel strip raised upward by the roll; and a control device that determines a failure in the strip surface shape of the metal strip on the basis of the image photographed by the camera.

Japanese Patent No. 7130350 describes a strip shape determining device for a metal strip, a rolling mill, and a determining method that are less likely to be affected by a slight disturbance and a small obstacle occurring suddenly than in conventional, the strip shape determining device including: a camera installed so as to photograph an image including an area in which band-shaped reflected light crossing in a widthwise direction of the rolled metal strip appears; and an image processing computer that determines the strip shape of the metal strip on the basis of the image photographed by the camera, the image processing computer dividing the area within the image into a plurality of zones in the widthwise direction of the metal strip, and transmitting, as a signal, information corresponding to a widthwise distribution of strip rolling elongation in a rolling direction on the basis of index information representing an area-related size of each of the divided zones.

SUMMARY OF THE INVENTION

There are a large number of conventionally known technologies for determining the quality of the strip shape of the metal strip rolled by a rolling mill, or, for example, the presence or absence of strip rolling elongation change on the basis of line-shaped or rod-shaped reflected light long in the widthwise direction of the metal strip.

The determination is based on a fact that when a change occurs in the strip shape with uneven rolling elongation occurring in a part thereof, the shape of the reflected light that has been in a line shape or a rod shape ceases to be the regular shape, and a part thereof is moved or displaced.

However, because of a narrow reflecting light area in the rolling direction at each position in the widthwise direction, the line-shaped or rod-shaped reflected light is significantly affected by an effect of a case where a slight disturbance occurs due to, for example, a small obstacle or the like, so that an erroneous determination tends to result.

The present inventor et al. found that the effect of such a disturbance can be reduced when the determination is made using band-shaped reflected light, as disclosed in Japanese Patent No. 6808888, and conceived a technology disclosed in Japanese Patent No. 7130350 as a technology for more utilizing the features of the band-shaped reflected light.

The technology described in Japanese Patent No. 7130350 applies, to a Chebyshev polynomial, a widthwise distribution of the rolling direction length, the area, or the like of a reflecting light area appearing on the surface of the strip at and in the vicinity of a curved portion of the metal strip raised by loopers for tension control installed between rolling mill stands of a rolling line, determines coefficients of the Chebyshev polynomial, and determines a widthwise distribution of strip rolling elongation.

On the other hand, as a result of further repeated diligent investigation, the present inventor et al. have found that while the technology described in Japanese Patent No. 7130350 assumes that changes in the rolling direction length, the area, or the like of the reflecting light area appearing on the strip correspond to changes in rolling elongation distribution of the strip, there is room for improvement in the technology because this assumption holds when a looper angle, that is, the height of a vertex position of the looper is constant and the lightness of the reflecting light area appearing on the surface of the strip, that is, the lightness of illumination and lightness in surroundings are constant.

Specifically, the looper is installed to control line tension, and therefore the looper angle varies during rolling. In addition, it becomes difficult for a lighting fixture to keep the lightness thereof constant due to degradation over time and the like, and thus the luminance of the illumination may vary. Further, the lightness in the surroundings may change between a day and a night.

Thus, because the looper angle varies and the luminance of the illumination and the lightness in the surroundings vary even though the widthwise distribution of strip rolling elongation is constant, the rolling direction length, the area, and the like of the reflecting light area appearing on the strip vary, and cause a phenomenon as if the strip rolling elongation distribution changed. There has therefore been found to be room for a further improvement.

The present invention provides a strip shape detecting device for a metal strip, a rolling mill, and a detecting method that can cancel out the effect of variations in the looper angle and cancel out the effect of variations in the luminance of the illumination and variations in the lightness in the surroundings, and assess only changes in the strip rolling elongation distribution.

The present invention includes a plurality of means for solving the above-described problems. To cite an example thereof, there is provided a strip shape detecting device for a rolled metal strip, the strip shape detecting device including: a camera installed so as to photograph an image including an area in which band-shaped reflected light crossing in a widthwise direction appears on a surface of the metal strip raised by a looper; and an image processing unit that determines a strip shape of the metal strip on a basis of the image photographed by the camera, the image processing unit being configured to divide the area within the image into a plurality of zones in the widthwise direction of the metal strip, providing a value representing a widthwise position of each of the divided zones is referred to as a variable $(x)$, standardize and convert the widthwise position within a widthwise range of the area in the image into a range of $-1 \leq x \leq 1$, apply index information representing magnitude corresponding to an amount of strip rolling elongation of the area in each of the zones to a Chebyshev polynomial $E(x) = C_0' + C_1' \times x + C_2' \times (2x^2 - 1) + C_4' \times (8x^4 - 8x^2 + 1)$ (where $-1 \leq x \leq 1$) representing a distribution $E(x)$ in each of the zones and having only zeroth order, first order, second order, and fourth order terms of $x$, determine coefficients $(C_0', C_1', C_2', \text{ and } C_4')$ of the Chebyshev polynomial, introduce a proportional corrective coefficient as a function of an angle of the looper and an illuminance of a reflecting light area resulting from illumination luminance and lightness in surroundings, correct the $E(x)$ such that a coefficient C0' of a zeroth order component of the Chebyshev polynomial is constant at all times in the $E(x)$ as $Ec(x) = C_0c + C_1c \cdot x + C_2c \cdot (2x^2 - 1) + C_4c \cdot (8x^4 - 8x^2 + 1)$, and transmit one or more of a first order corrective coefficient $(C_1c)$, a second order corrective coefficient $(C_2c)$, and a fourth order corrective coefficient $(C_4c)$, the corrective coefficients being information corresponding to a widthwise distribution of strip rolling elongation in a rolling direction, as signals indicative of results of decision of the widthwise distribution of strip rolling elongation.

According to the present invention, it is possible to cancel out the effect of variations in the looper angle and cancel out the effect of variations in the luminance of illumination and variations in the lightness in the surroundings, and assess only changes in the strip rolling elongation distribution. Problems, configurations, and effects other than those described above will be made apparent by the following description of embodiments.

BRIEF DESCRIPTION OF THE DRAWINGS

FIG. 1 is a diagram illustrating an outline of a rolling facility including a strip shape detecting device for a metal strip according to an embodiment of the present invention;

FIG. 2 is a diagram illustrating an example of a state of the metal strip between rolling mill stands at a time of operation in the rolling facility;

FIG. 3 is a diagram illustrating another example of the state of the metal strip between the rolling mill stands at a time of operation in the rolling facility;

FIG. 4 is a diagram illustrating a method of calculating an average length within each divided zone in the strip shape detecting device for the metal strip according to the embodiment and an example of states of component distributions of a Chebyshev polynomial;

FIG. 5 is a diagram illustrating an example of a distribution of a distance between boundary lines on an upstream side and a downstream side of each divided zone of a reflecting light area when the metal strip is divided into seven zones in a width direction in the strip shape detecting device for the metal strip according to the embodiment;

FIG. 6 is a diagram illustrating a state in a case where a looper upper portion position is high at a time of operation in the rolling facility;

FIG. 7 is a diagram illustrating a state in a case where the looper upper portion position is low at a time of operation in the rolling facility;

FIG. 8 is a diagram illustrating a state in a case where an illuminance at which the reflecting light area is illuminated is high at a time of operation in the rolling facility;

FIG. 9 is a diagram illustrating a state in a case where the illuminance at which the reflecting light area is illuminated is low at a time of operation in the rolling facility; and

FIG. 10 is a diagram illustrating an example of a display screen of a monitor in the strip shape detecting device for the metal strip according to the embodiment.

DESCRIPTION OF THE PREFERRED EMBODIMENTS

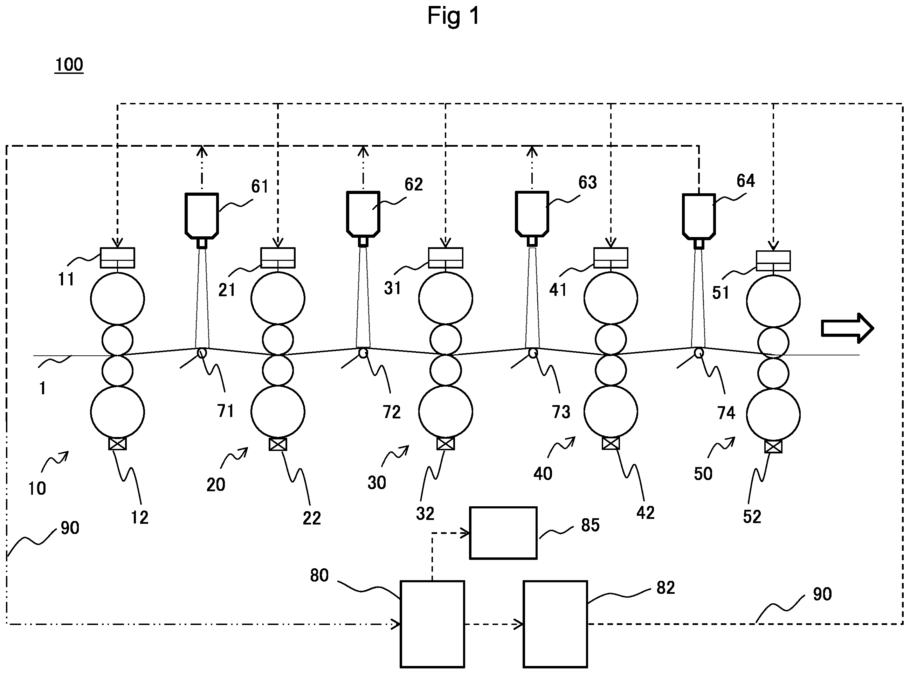

Embodiments of a strip shape detecting device for a metal strip, a rolling mill, and a detecting method according to the present invention will be described with reference to FIGS. 1 to 10. Incidentally, in the drawings used in the present specification, identical or corresponding constituent elements are identified by identical or similar reference numerals, and repeated description of these constituent elements may be omitted.

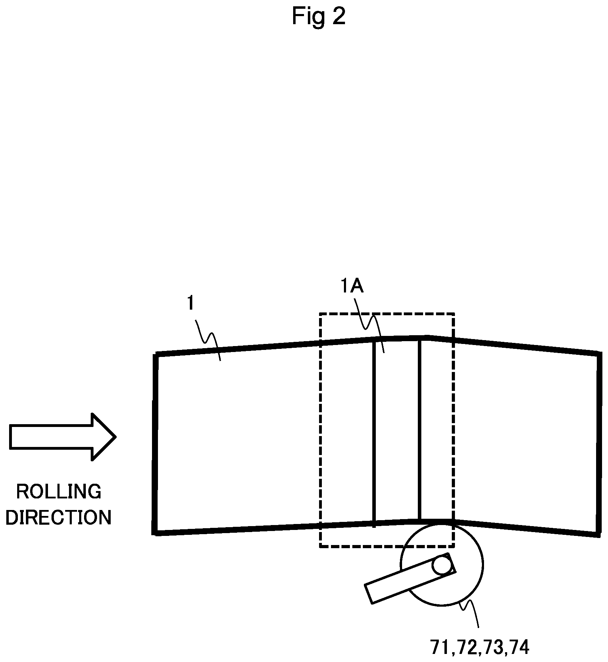

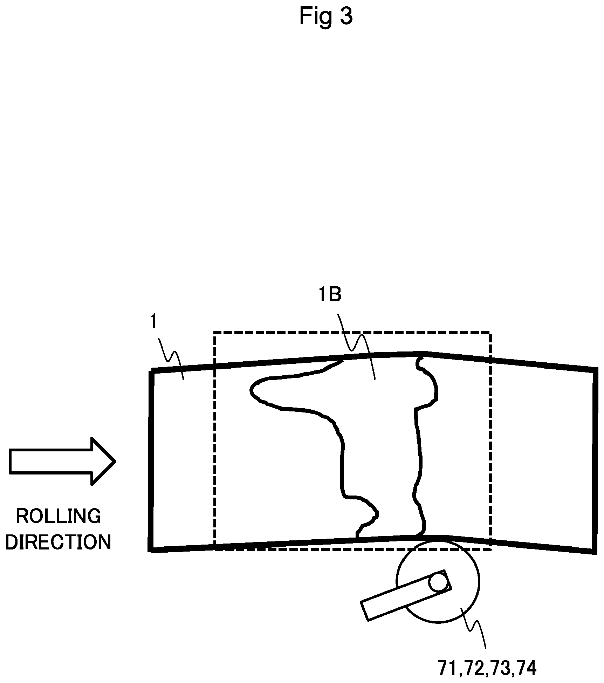

A general configuration of a rolling facility including a strip shape detecting device for a metal strip will first be described with reference to FIGS. 1 to **3.** FIG. 1 is a schematic diagram illustrating a configuration of the strip shape detecting device for the metal strip and the rolling facility including the strip shape detecting device according to a present embodiment. FIG. 2 and FIG. 3 are diagrams illustrating an example of states of the surface of the metal strip between rolling mill stands at a time of operation in the rolling facility.

The rolling facility 100 for rolling the metal strip 1 illustrated in FIG. 1 includes an F1 rolling mill stand 10, an F2 rolling mill stand 20, an F3 rolling mill stand 30, an F4 rolling mill stand 40, an F5 rolling mill stand 50, cameras 61, 62, 63, and 64, loopers 71, 72, 73, and 74 for tension control, an image processing computer 80, a control device 82, a monitor 85, and the like.

In addition, the F1 rolling mill stand 10, the F2 rolling mill stand 20, the F3 rolling mill stand 30, the F4 rolling mill stand 40, the F5 rolling mill stand 50, the cameras 61, 62, 63, and 64, the image processing computer 80, and the control device 82 are connected to one another by a communication line 90.

It is to be noted that the rolling facility 100 is not limited to the configuration in which five rolling mill stands are installed as illustrated in FIG. 1, but it suffices for the rolling facility 100 to have at least two rolling mill stands or more.

The F1 rolling mill stand 10, the F2 rolling mill stand 20, the F3 rolling mill stand 30, the F4 rolling mill stand 40, and the F5 rolling mill stand 50 respectively include top work rolls and bottom work rolls, top backup rolls and bottom backup rolls supporting the top work rolls and the bottom work rolls by being in contact with the top work rolls and the bottom work rolls, respectively, screw-down cylinders 11, 21, 31, 41, and 51 provided to upper portions of the top backup rolls, and load detectors 12, 22, 32, 42, and 52. Incidentally, a six-high configuration can be adopted in which intermediate rolls are further provided between the respective work rolls and the respective backup rolls.

The looper 71 is a roll for tension control installed between the F1 rolling mill stand 10 and the F2 rolling mill stand 20. The rotational axis of the looper 71 is disposed so as to extend in the width direction of the metal strip 1 such that the moving metal strip 1 is mounted on the looper 71, and the looper 71 is installed so as to raise the metal strip 1 upward and hold the metal strip 1.

Incidentally, conceivable as the looper 71 is, for example, one that biases the metal strip upward by a spring or the like, or one that raises the metal strip by, for example, driving a hydraulic cylinder or a motor.

The camera 61 is installed so as to photograph an image including an area in which band-shaped reflected light crossing in a widthwise direction of the rolled metal strip 1 appears. Preferably, the camera 61 is installed so as to photograph an image including a raised area of the metal strip 1 raised upward by the looper 71. In particular, the camera 61 can be installed on the outside in the widthwise direction of the metal strip 1 when the metal strip 1 is viewed from above. The data of the image photographed by the camera 61 is transmitted to the image processing computer 80 via the communication line 90.

Similarly, the looper 72 for tension control is installed between the F2 rolling mill stand 20 and the F3 rolling mill stand 30, the looper 73 for tension control is installed between the F3 rolling mill stand 30 and the F4 rolling mill stand 40, and the looper 74 for tension control is installed between the F4 rolling mill stand 40 and the F5 rolling mill stand 50.

In addition, the camera 62 is installed in such a position as to photograph an image including a raised area of the metal strip 1 raised upward in a vertical direction by the looper 72, the camera 63 is installed in such a position as to photograph an image including a raised area of the metal strip 1 raised upward by the looper 73, and the camera 64 is installed in such a position as to photograph an image including a raised area of the metal strip 1 raised upward by the looper 74. The data of the images photographed by the cameras 62, 63, and 64 is transmitted to the image processing computer 80 via the communication line 90.

As with the camera 61, preferably, the cameras 62, 63, and 64 are also installed on the outside in the widthwise direction of the metal strip 1 when the metal strip 1 is viewed from above.

By using these cameras 61, 62, 63, and 64, a photographing step is performed which step photographs the images including the areas in which the band-shaped reflected light crossing in the widthwise direction of the rolled metal strip 1 appears.

It is possible to further provide illumination for illuminating the raised photographed areas of the metal strip 1 raised upward by the rolls, the photographed areas being mainly photographed by the cameras 61, 62, 63, and 64. This illumination may be an ordinary illumination disposed as appropriate on a ceiling or the like of a rolling plant in which the rolling facility 100 is installed. The present invention does not need a special new illumination facility. However, a dedicated illumination may be provided.

The image processing computer 80 performs various kinds of processing (including an image processing step) for determining the strip shape of the metal strip 1 on the basis of the images photographed by the cameras 61, 62, 63, and 64.

For example, in image processing on the images including the raised areas as curved vicinities of the metal strip 1 raised upward by the loopers 71, 72, 73, and 74 as illustrated in FIG. 2 or FIG. 3, a range including boundaries on an upstream side and a downstream side of a part in which the luminance of reflected light on the surface of the metal strip 1 appearing in each of the images is higher than the value of a specific luminance is identified as a reflecting light area 1A or a reflecting light area 1B.

The image processing computer 80 in the present embodiment divides the reflecting light area within the image into a plurality of zones in the widthwise direction of the metal strip 1, and transmits information about a widthwise distribution of strip rolling elongation in a rolling direction as a signal on the basis of the boundary positions of the reflecting light area 1A or 1B on the upstream side and the downstream side and index information related to magnitude corresponding to an amount of strip rolling elongation in the reflecting light area such as an area value in each of the divided zones.

In the area in which the band-shaped reflected light crossing in the widthwise direction of the metal strip 1 appears, when strip elongation in the rolling direction (longitudinal direction of the metal strip) at each widthwise position of the metal strip 1 is uniform, there is a small distribution difference due to a reflected condition of the illumination, as illustrated in FIG. 2, because of a flat surface of the metal strip 1 and a small strip wave. Therefore, the boundary lines of the reflecting light area 1A formed by the illumination on the upstream side and the downstream side are substantially parallel with each other, and the various kinds of parameters as described above in each of the zones when the reflecting light area 1A is divided into the plurality of zones in the widthwise direction are substantially the same or uniform in all of the zones.

On the other hand, in a case where there is a difference in strip elongation in the rolling direction according to the widthwise position (example: an edge wave or a center buckle), the reflected condition of the illumination differs depending on a different amplitude of the strip wave or the like, and one or both of the boundary lines of the reflecting light area 1B formed by the illumination on the upstream side and the downstream side is (are) undulated, as illustrated in FIG. 3, so that the boundary lines are not parallel with each other. Therefore, the parameters such as the length of each zone in the rolling direction in the case where the reflecting light area 1B in a metal strip shape is divided into the plurality of zones in the widthwise direction are uneven according to the widthwise position.

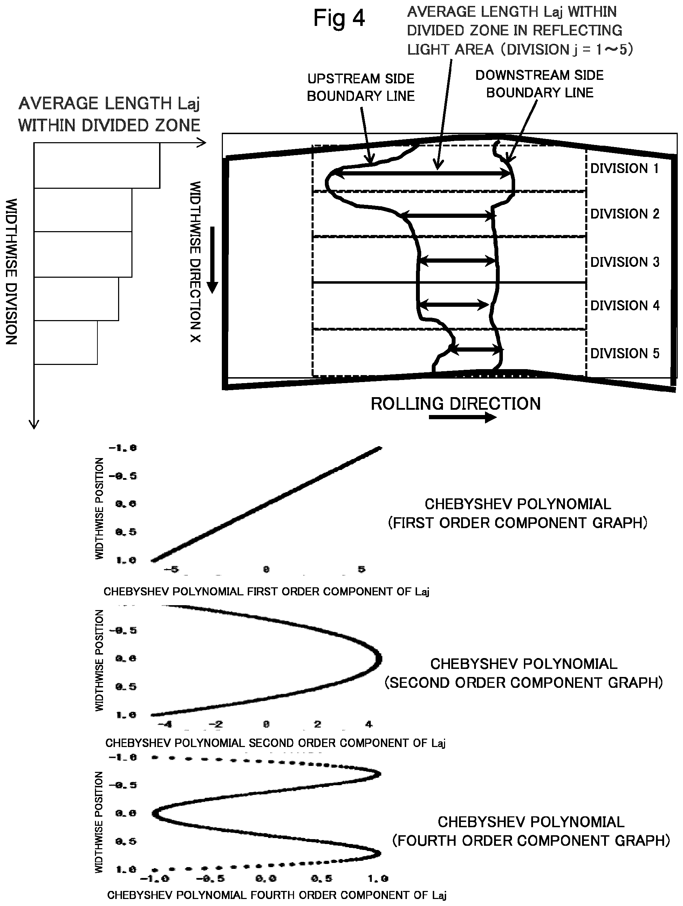

Accordingly, the image processing computer 80 determines various parameters (index information) by dividing various parameters, which include values related to the two boundary lines on the upstream side and the downstream side of the reflecting light area, an area value related to a distance between the two boundary lines, and the like, into a plurality of parameters in the widthwise direction, and resolves these values into each component (distribution of a zeroth order component, a first order component, a second order component, and a fourth order component) preferably by using a Chebyshev polynomial for the values. A decision result corresponding to each of the component values is output to the monitor 85 and the control device 82. Details thereof will be described later in detail with reference to FIG. 4 and subsequent figures. Preferably, the image processing computer 80 is an execution entity of the image processing step.

Returning to FIG. 1, the control device 82 is a device that controls the operation of various apparatuses within the rolling facility 100. In the present embodiment, the control device 82 is a device that performs various kinds of control according to the decision of the strip shape of the metal strip 1 in the image processing computer 80.

The image processing computer 80 and the control device 82 can be constituted by a computer including the monitor 85 such as a liquid crystal display to be described later, an input device, a storage device, a central processing unit (CPU), a memory, and the like. The image processing computer 80 and the control device 82 may be constituted by one computer or constituted by separate computers, and are not particularly limited.

The control of the operation of the various apparatuses by the image processing computer 80 and the control device 82 is performed on the basis of various kinds of programs recorded in the storage device. Incidentally, the processing of the operation control performed by the image processing computer 80 and the control device 82 may be integrated in one program, or respective pieces of the processing may be separated in a plurality of programs, or there may be a combination thereof. In addition, a part or all of the programs may be implemented by dedicated hardware, or may be modularized.

The monitor 85 includes a display apparatus such as a display and an audio apparatus such as an alarm. The monitor 85 is a device for notifying an operator of work for handling a problem, for example, when the image processing computer 80 decides that the problem has occurred in the strip shape. A display is therefore often used as such a monitor 85.

Here, the image processing computer 80 described above includes a display signal section, and transmits a signal related to contents to be displayed on the monitor 85 to the monitor 85.

During operation, the operator can check the state of the strip shape by visually checking a display screen of the monitor 85, the rolling mill stands themselves, and states between the rolling mill stands.

It is to be noted that there is no limitation to a configuration in which the operator is notified of the occurrence of the problem in the strip shape, and an operation for remedying the problem in the strip shape is automatically performed by the control device 82, but a configuration can be adopted in which the problem in the strip shape is only displayed on the monitor 85, or a configuration can be adopted in which the display on the monitor 85 is omitted, and only the operation for remedying the problem in the strip shape is automatically performed by the control device 82.

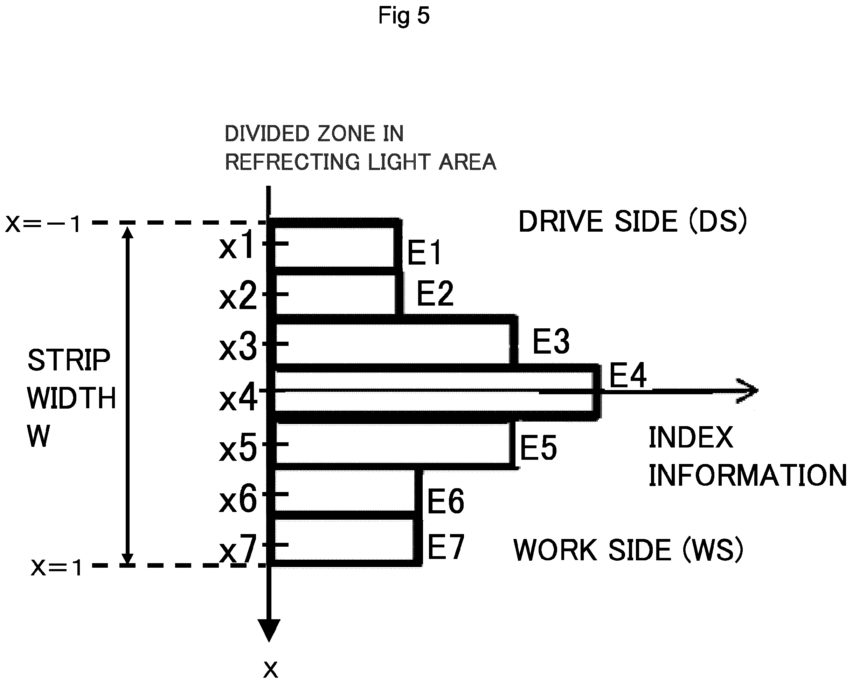

A concrete example of the strip shape detecting device for the rolled metal strip 1 and the detecting method in the present invention will next be described with reference to FIG. 4 and subsequent figures. Details of a method of calculating state quantities in the width direction from calculated values of the boundary lines of the reflecting light area will first be described with reference to FIG. 4 and FIG. **5.**

FIG. 4 is a diagram illustrating an example of a method of calculating index information in each divided zone of a reflecting light area in the strip shape detecting device for the metal strip according to the embodiment and a state of component distribution of each order of a Chebyshev polynomial. FIG. 5 is a diagram illustrating an example of distribution of a distance between the boundary lines on the upstream side and the downstream side of each divided zone in the reflecting light area when a range including the reflecting light area of the metal strip is divided into seven zones in the widthwise direction.

First, the image processing computer 80 subjects a rolling surface image range selected from the images photographed by the cameras 61, 62, 63, and 64 to binarization processing for each pixel, and obtains an appropriate threshold value for a degree of lightness. The image processing computer 80 thereby obtains two widthwise boundary lines on the upstream side and the downstream side of the reflecting light area in a rolling longitudinal direction. This processing is performed for all in the widthwise direction to identify the reflecting light area 1A or 1B. For details thereof, a publicly known method can be adopted.

Next, the reflecting light area 1A or 1B is divided into N zones in the widthwise direction (divided into five zones in FIG. 4, and divided into seven zones in FIG. 5). Letting j be the number (No.) of each divided zone (j = 1 to N), regarding pixels (picture elements) present within the image of the divided zone No. j, a distance in the rolling direction (Y-axis direction) between the boundary lines on the upstream side and the downstream side of the reflecting light area is obtained at each pixel position in the widthwise direction (X-axis direction), and index information is calculated. In FIG. 4, for example, for each divided zone, a result of calculating an average length $L_{aj}$ in the rolling direction of each divided zone as the index information is produced in a bar graph.

At this time, when index information $E(x)$ is approximated by a Chebyshev polynomial

$$E(x) = C_0' + C_1' \times x + C_2' \times (2x^2 - 1) + C_4' \times (8x^4 - 8x^2 + 1) \qquad (1)$$

to be described later in detail, there are four unknown coefficients ($C_0$, $C_1$, $C_2$, and $C_4$) to be described later for determining $C_0'$, $C_1'$, $C_2'$, and $C_4'$, and four or more relational equations are necessary to determine the unknown quantities. Therefore, the number of divisions in the widthwise direction is set to be four or more. In addition, a central portion in the widthwise direction preferably belongs to a certain divided zone. It is therefore preferable that the number of divisions be an odd number, and that the widthwise central portion not be positioned at a boundary between divided zones.

Incidentally, it is preferable that a plurality of pixels be included in one divided zone in the widthwise direction. This is to reduce susceptibility to an effect of a case where there is an abnormality in a pixel in the widthwise direction. The number of divisions is preferably 4 to 11. An odd number is particularly preferable. Four as a lower limit of the number of divisions is to make it possible to obtain the coefficients of the Chebyshev polynomial. Eleven as an upper limit of the number of divisions is set because coefficients of sufficient accuracy are obtained when there are 11 divisions, and even when the number of divisions is further increased, the accuracy is not raised by a degree by which a calculation load is increased.

Next, supposing that a value indicating a position in the widthwise direction in the bar graph is a variable (x), the image processing computer 80 performs coordinate transformation and standardization of the widthwise position of the area within the image into a range of $-1 \leq x \leq 1$. x = -1 represents a widthwise drive side (DS) edge portion. x = 1 represents a widthwise work side (WS) edge portion. x = 0 represents a widthwise central position. First, a coefficient vector ($C_0$, $C_1$, $C_2$, $C_4$) of each component is calculated by using a function expressed by $E(x) = C_0 + C_1 \times x + C_2 \times x^2 + C_4 \times x^4$ having only zeroth order, first order, second order, and fourth order terms in which function the index information in each divided zone is set as a distribution ($E(x)$) of each divided zone. Thereafter, assuming that the Chebyshev polynomial and the above-described equation are equivalent to each other, the Chebyshev polynomial coefficient vector ($C_0'$, $C_1'$, $C_2'$, $C_4'$) as each component is obtained.

As features of approximating the index information corresponding to a rolling direction strip elongation distribution with respect to the widthwise direction by the Chebyshev polynomial, (1) a widthwise range (X-axis) is standardized in a range of -1 to +1, and (2) the first order component (unilateral buckle), the second order component (center buckle and edge buckle), and the fourth order component (quarter buckle) are separated from each other, so that a control operation amount for each component can be determined easily.

A method of calculating the Chebyshev polynomial coefficient vector ($C_0'$, $C_1'$, $C_2'$, $C_4'$) from the measured value of each divided zone will be illustrated in the following. Here, description will be made by taking as an example a case where, as illustrated in FIG. 5, unlike FIG. 4 or the like, the metal strip 1 is divided into seven zones in the width direction.

Letting x = xi, a relational equation between a vector $(E_1, E_2, E_3, E_4, E_5, E_6, E_7)$ of each distribution value of the index information when seven divisions are made in the width direction as illustrated in FIG. 5 and a fourth order equation coefficient vector $(C_0, C_1, C_2, C_4)$ can be expressed as in the following Equation (2):

$$E(x_i) = C_0 + C_1 \times x_i + C_2 \times x_i^2 + C_4 \times x_i^4 \quad (i = 1 \text{ to } 7) \quad \ldots (2)$$

Equation (2) is expressed by vectors and a matrix as in Equation (3) illustrated in the following.
[Expression 1]

$$\begin{pmatrix} E_7 \end{pmatrix} \quad \begin{pmatrix} 1 & x_7 & x_7^2 & x_7^4 \end{pmatrix} \quad \ldots (3)$$

Here, in Equation (3), a widthwise direction position (x) is $(-1 \leq x \leq 1)$. x = -1 represents a widthwise edge position on the drive side (DS). x = 1 represents a widthwise edge position on the work side (WS). xi (i = 1 to 7) is a widthwise direction position $(-1 \leq xi \leq 1)$ at which a detected value is set in each divided zone position, and can be said to be a width direction position coordinate (xi) at a central position of each divided zone with the widthwise central position set as x = 0.

From this Equation (3), the unknown quantity vector $(C_0, C_1, C_2, C_4)$ is calculated by a least-square method, and the Chebyshev polynomial coefficient vector $(C_0', C_1', C_2', C_4')$ is obtained. The least-square method at this time can be a method illustrated in the following.

First, when Equation (3) is represented as E = M × C by expressing Equation (3) by characters in a matrix form and a vector form, the left side and the right side multiplied by a transposed matrix $M^T$ from the left are expressed by the following Equation (4).

$$M^T \times E = (M^T \times M) \times C \quad \ldots (4)$$

where $E = [E_1, E_2, E_3, E_4, E_5, E_6, E_7]$, M = $[[1, x_1, x_1^2, x_1^4], [1, X2, x_2^2, x_2^4], [1, X3, x_3^2, x_3^4], [1, X4, x_4^2, x_4^4], [1, x_5, x_5^2, x_5^4], [1, x_6, x_6^2, x_6^4], [1, x_7, x_7^2, x_7^4]]$, and C = $[C_0, C_1, C_2, C_4]$.

Hence, a coefficient vector C is calculated in the following Equation (5) using an inverse matrix $(M^T \times M)^{-1}$ of a matrix $(M^T \times M)$.

$$C = (M^T \times M)^{-1} \times M^T \times E \quad \ldots (5)$$

$(C_0, C_1, C_2, C_4)$ is obtained from this Equation (5), and the above-described Equation (1) is obtained when the index information E(x) indicating the state of the reflecting light area is expressed by the Chebyshev polynomial coefficient vector $(C_0', C_1', C_2', C_4')$.

Hence, from Equation (1) and Equation (2), $(C_0', C_1', C_2', C_4')$ can each be calculated by the following Equation (6).
[Expression 2]

$$C_0' = C_0 + C_2' - C_4'$$
$$C_1' = C_1$$
$$C_2' = 1/2 \times (C_2 + C_4)$$
$$C_4' = 1/8 \times C_4 \quad \ldots (6)$$

Here, the term $C_0'$ of the zeroth order component is necessary in the equation, and is therefore preferably obtained. The term $C_0'$ of the zeroth order component represents index information serving as a baseline (foundation) of the whole, and the components of the other orders represent the component distributions of the respective orders while superimposed on the baseline. In a case where strip elongation distributions corresponding to the components of the first order and higher orders do not occur, the distance between the boundary lines on the upstream side and the downstream side of the reflecting light area is a length substantially uniform in the rolling direction, as illustrated in FIG. 2.

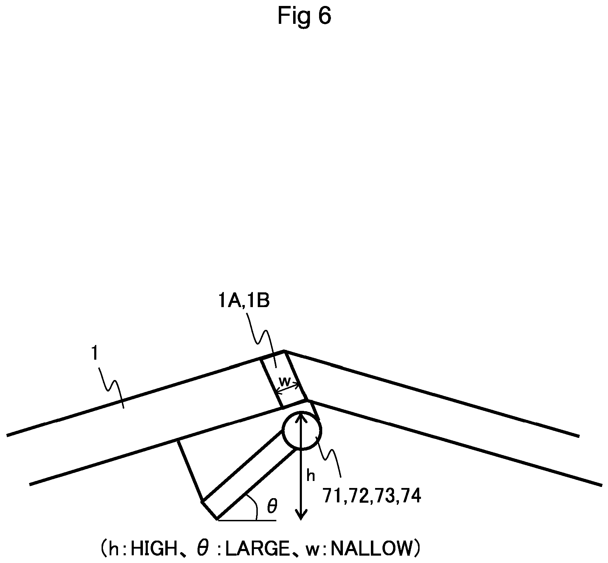

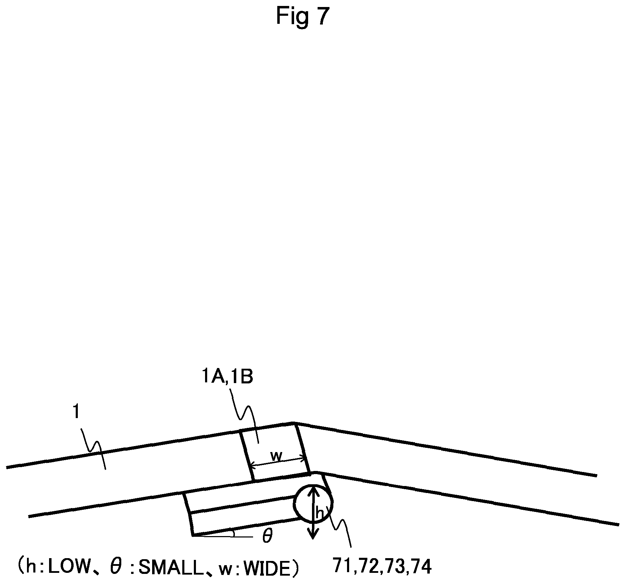

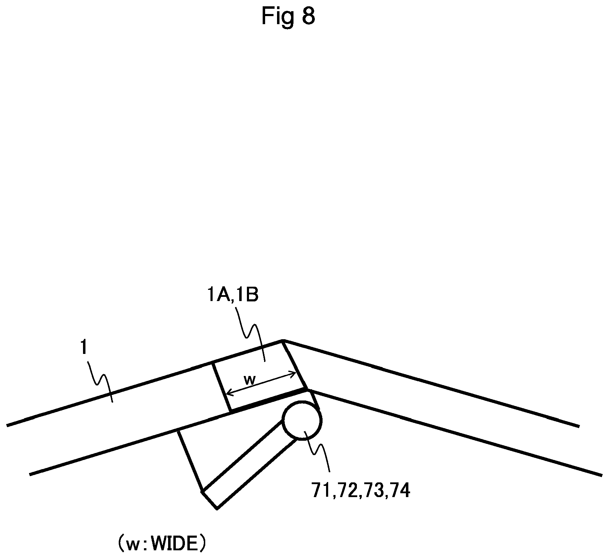

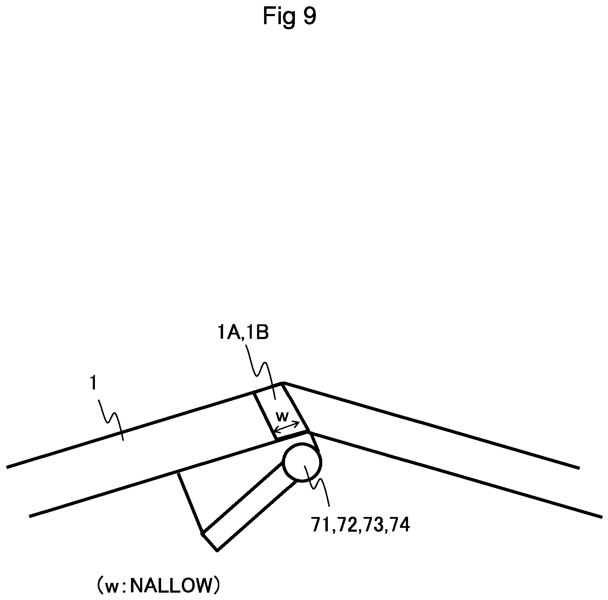

Here, as a result of diligent investigation by the present inventor et al., it has become clear that variations in the angle of the loopers 71, 72, 73, and 74 and variations in illuminance as described above can be dealt with by performing additional processing as in the following. In the following, description will be made with reference to FIGS. 6 to 9. FIG. 6 is a diagram illustrating a state in a case where a looper upper portion position h is high during operation in the rolling facility. FIG. 7 is a diagram illustrating a state in a case where the looper upper portion position h is low. FIG. 8 is a diagram illustrating a state in a case where the illuminance at which the reflecting light area is illuminated is high. FIG. 9 is a diagram illustrating a state in a case where the illuminance at which the reflecting light area is illuminated is low.

Japanese Patent No. 7130350 assumes that changes in the rolling direction length, the area, and the like of the reflecting light area appearing on the strip correspond to changes in rolling elongation of the strip. This assumption holds when the angle $\theta$ of the loopers 71, 72, 73, and 74, that is, the height of the vertex position h of the loopers 71, 72, 73, and 74 is fixed, and the lightness of the reflecting light area appearing on the surface of the metal strip 1, that is, the lightness of the illumination and the lightness in surroundings are fixed.

However, because the loopers 71, 72, 73, and 74 are installed to control line tension, the angle $\theta$ of the loopers 71, 72, 73, and 74 varies during rolling. In addition, it is difficult for a lighting fixture to keep the lightness thereof constant due to degradation over time and the like, and thus the luminance of the illumination may vary. Further, the lightness in the surroundings may change between a day and a night, and may also depend on the weather outside the plant or the like.

For example, as illustrated in FIG. 6, in a case where the upper portion position h of the looper 71, 72, 73, or 74 is high, a rolling direction length w of the reflecting light area 1A or 1B is relatively short as compared with a case where the upper portion position h of the looper 71, 72, 73, or 74 is low as illustrated in FIG. 7. In addition, as illustrated in FIG. 8, in a case where the illuminance of the reflecting light area is high, the rolling direction length w of the reflecting light area 1A or 1B is relatively long as compared with a case where the illuminance of the reflecting light area is low as illustrated in FIG. 9.

Thus, because the angle $\theta$ of the loopers 71, 72, 73, and 74 varies and the luminance of the illumination and the lightness in the surroundings vary even though the widthwise distribution of strip rolling elongation is constant, the rolling direction length, the area, and the like of the reflecting light area appearing on the strip vary, and cause a phenomenon as if the strip rolling elongation distribution changed.

Accordingly, the present invention further performs processing of canceling out the effect of such variations in the angle $\theta$ of the loopers 71, 72, 73, and 74 and further canceling out the effect of variations in the luminance of the illumination and variations in the lightness in the surroundings, and assessing only changes in the strip elongation distribution.

As described above, in Japanese Patent No. 7130350, the Chebyshev polynomial that is applied to the widthwise distribution of the rolling direction length, the area, or the like of the reflecting light area appearing on the surface of the metal strip 1 at and in the vicinity of a curved portion of the metal strip 1 raised by the loopers 71, 72, 73, and 74 is as in Equation (1).

Here, E(x) in Equation (1) represents a length in the rolling direction of the reflecting light area on the surface of the metal strip 1 at the looper 71, 72, 73, or 74.

When the height position of the looper 71, 72, 73, or 74 is constant, and the luminance of the illumination and the lightness in the surroundings are constant and do not change, the length in the rolling direction of the reflecting light area on the surface of the metal strip 1 at the looper 71, 72, 73, or 74 corresponds to a radius of curvature in the rolling direction of the strip, and the radius of curvature in the rolling direction of the strip is determined by the magnitude of strip elongation.

That is, when the angle of the looper 71, 72, 73, or 74 is constant, and the luminance of the illumination is constant, E(x), that is, the length in the rolling direction of the reflecting light area on the surface of the metal strip 1 at the looper 71, 72, 73, or 74 represents the magnitude corresponding to the strip rolling elongation.

Accordingly, Chebyshev coefficients are corrected so as not to depend on changes in the angle of the loopers 71, 72, 73, and 74 and changes in the illumination luminance and the lightness in the surroundings. Suppose that, first, a proportional corrective coefficient $F(\theta, L)$ is introduced, which is a function of the angle $\theta$ of the loopers 71, 72, 73, and 74 and the illuminance L of the reflecting light area resulting from the illumination luminance and the lightness in the surroundings.

A Chebyshev polynomial obtained by correcting Equation (1) so as not to depend on changes in the angle $\theta$ of the loopers 71, 72, 73, and 74 and so as not to depend on changes in the illuminance L of the reflecting light area is described as in the following Equation (7).

$$Ec(x) = C_0c + C_1cx + C_2c(2x^2 - 1) + C_4c(8x^4 - 8x^2 + 1) \ (-1 \leq x \leq 1) \tag{7}$$

That is, Ec(x) is defined as representing a pure relative distribution of the strip elongation which distribution does not depend on changes in the angle of the loopers 71, 72, 73, and 74 and changes in the illumination luminance.

E(x) in Equation (1) can be considered to be obtained by multiplying Ec(x) in Equation (7) representing a pure strip elongation distribution by $F(\theta, L)$ as a proportional corrective coefficient, $F(\theta, L)$ being a function of the angle $\theta$ of the loopers 71, 72, 73, and 74 and the illuminance L at which the reflecting light area formed on the surface of the metal strip is illuminated. That is, E(x) in Equation (1) can be described as in the following Equation (8).

$$E(x) = F(\theta, L)Ec(x) = F(\theta, L)[C_0c + C_1cx + C_2c(2x^2 - 1) + C_4c(8x^4 - 8x^2 + 1)] \tag{8}$$

That is, from Equation (1) and Equation (8), relations as in the following Equations (9) to (12) are obtained.

$$C_0' = F(\theta, L)C_0c \quad ... \quad (9)$$

$$C_1' = F(\theta, L)C_1c \quad ... \quad (10)$$

$$C_2' = F(\theta, L)C_2c \quad ... \quad (11)$$

$$C_4' = F(\theta, L)C_4c \quad ... \quad (12)$$

Here, the Chebyshev coefficients ($C_0c$, $C_1c$, $C_2c$, and $C_4c$) of Ec(x) representing a pure strip elongation distribution can be described as in the following Equations (13) to (16) from Equations (9) to (12).

$$C_0c = C_0'/F(\theta, L) \quad ... \quad (13)$$

$$C_1c = C_1'/F(\theta, L) \quad ... \quad (14)$$

$$C_2c = C_2'/F(\theta, L) \quad ... \quad (15)$$

$$C_4c = C_4'/F(\theta, L) \quad ... \quad (16)$$

Thus, when F($\theta$, L) can be obtained, the Chebyshev coefficients ($C_0c$, $C_1c$, $C_2c$, and $C_4c$) of Ec(x) representing a pure strip elongation distribution can be obtained.

Description will next be made of a flow of derivation of the proportional corrective coefficient F($\theta$, L) as a function of the angle $\theta$ of the loopers 71, 72, 73, and 74 and the illuminance L at which the reflecting light area is illuminated.

When the angle $\theta$ of the loopers 71, 72, 73, and 74 does not change, and the illuminance L of the reflecting light area does not change either, the first order component ($C_1'$), the second order component ($C_2'$), and the fourth order component ($C_4'$) as the Chebyshev coefficients in Equation (1) represent widthwise left and right changes, with x = 0 in E(x) in Equation (1) as a pivot, x = 0 being the widthwise central position, while the zeroth order component ($C_0'$) of the Chebyshev coefficient represents an average value of an amount of strip rolling elongation caused by rolling, and is judged to maintain a constant value at all times when constant draft control is performed in each rolling mill.

That is, the zeroth order component ($C_0'$) of the Chebyshev coefficients in Equation (1) at a certain time t (Time = t) is set as ($C_0't$), and is described as in the following Equation (17), and it is assumed that the zeroth order component of the Chebyshev coefficients should represent a constant value of $C_0std$ in the following at all times.

$$C_0't = C_0std \ (C_0std: \text{ a constant value}) \quad ... \quad (17)$$

Supposing that the zeroth order corrective coefficient ($C_0c$) of the Chebyshev coefficients in Ec(x) in Equation (7), which represents a pure strip elongation distribution not depending on changes in the angle of the loopers 71, 72, 73, and 74 and changes in the illuminance of the reflecting light area, represents the constant value of $C_0std$, the zeroth order corrective coefficient ($C_0c$) can also be described as in the following Equation (18).

$$C_0c = C_0std \quad ... \quad (18)$$

When Equation (18) is substituted into Equation (13), the proportional corrective coefficient F($\theta$, L) as a function of the angle $\theta$ of the loopers 71, 72, 73, and 74 and the illuminance L of the reflecting light area can be written as in the following Equation (19).

$$F(\theta, L) = C_0'/C_0std \quad ... \quad (19)$$

Next, the Chebyshev coefficients ($C_0c$, $C_1c$, $C_2c$, and $C_4c$) of Ec(x) representing a pure strip elongation distribution are calculated.

Here, when Equation (19) is substituted into Equations (13) to (16), the zeroth order corrective coefficient ($C_0c$),

the first order corrective coefficient ($C_1c$), the second order corrective coefficient ($C_2c$), and the fourth order corrective coefficient ($C_4c$) as the Chebyshev coefficients of Ec(x) representing a pure strip elongation distribution can be obtained as in the following Equations (20) to (23).

$$C_0c = C_0{'}C_0std/C_0{'} = C_0std \quad ... \quad (20)$$

$$C_1c = C_1{'}C_0std/C_0{'} \quad ... \quad (21)$$

$$C_2c = C_2{'}C_0std/C_0{'} \quad ... \quad (22)$$

$$C_4c = C_4{'}C_0std/C_0{'} \quad ... \quad (23)$$

That is, by Equation (20) to (23), it is possible to more accurately obtain the Chebyshev coefficients depending only on the magnitude of the strip elongation without depending on the angle $\theta$ of the loopers 71, 72, 73, and 74 and without depending on the illuminance L of the reflecting light area affected by variations in the luminance of the illumination and variations in the lightness in the surroundings.

In addition, suppose that a third order component is not used in the present embodiment. This is because the rolling control mechanisms of the rolling mills are not configured to handle strip elongation correction for the third order component. The determination of conditions of rolled strip shapes of the first order component, the second order component, and the fourth order component that are separated and the strip elongation correction can be performed more easily by omitting computation processing and handling means for the third order component.

The image processing computer 80 can output control command signals to correct leveling, a bending force, a pair cross angle, and the like to the control device 82 on the basis of a polynomial approximation result in the widthwise direction obtained in Equation (6). Further, instead or in addition, correction information for the leveling, the bending force, the pair cross angle, and the like can be communicated to the operator by outputting, to the monitor 85, a display command signal to make guidance display necessary for the correction of the leveling, the bending force, the pair cross angle, and the like.

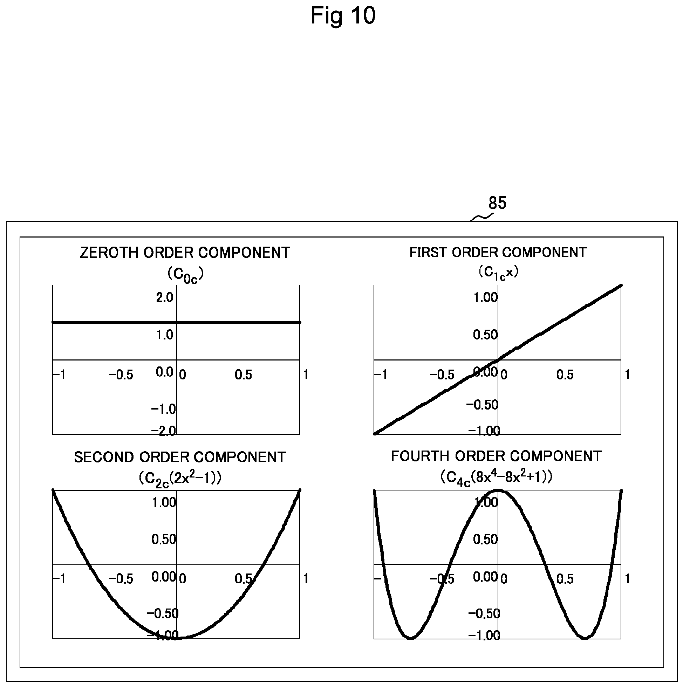

Preferably, the image processing computer 80 can transmit a signal to the monitor 85 so as to display a graph of the respective component terms of the zeroth order component ($C_0c$), the first order component ($C_1c \times x$), the second order component ($C_2c \times (2x^2 - 1)$), and the fourth order component ($C_4c \times (8x^4 - 8x^2 + 1)$) in the function of the vector ($C_0c$, $C_1c$, $C_2c$, $C_4c$) of each order term in E(x) described above. A screen displayed on the monitor 85 is a screen as illustrated in FIG. 10, for example.

FIG. 10 is a diagram illustrating an example of the display screen of the monitor. While the zeroth order component term ($C_0c$) is also displayed in FIG. 10, the signal of the zeroth order component term does not necessarily need to be transmitted to the monitor 85 or displayed on the monitor 85 because automatic control and operation assistance for the operator are not performed on the basis of the zeroth order component term. Incidentally, it is possible to learn information about changes in line tension on the basis of the zeroth order component term.

The operator can perform an operation of correcting, for example, the leveling, the bending force, and the pair cross angle (in a case of a pair cross rolling mill) by checking the screen illustrated in FIG. 10. For example, the first order component ($C_1c \times x$) indicates a unilateral buckle, and therefore the leveling of the screw-down cylinders 11, 21, 31, 41, and 51 is operated.

Of the Chebyshev polynomial coefficients of the corrected Ec(x), $C_1c$ as the first order component represents an index of the unilateral buckle. Thus, an operation command signal is output to the control device 82 so as to normalize the first order component (into a target range) by operating the leveling of the screw-down cylinder 41 on the drive side (DS) and the work side (WS) on the upstream side of the camera 64 in question and/or the screw-down cylinder 51 on the drive side (DS) and the work side (WS) on the downstream side of the camera 64.

Of the Chebyshev polynomial coefficients of the corrected Ec(x), $C_2c$ of the second order component represents an index of an edge buckle or a center buckle. Accordingly, one or more of the following operations are performed. The second order component is normalized (into a target range) by outputting an operation command signal to the control device 82 so as to operate bending devices of the work roll / intermediate rolls of the F4 rolling mill stand 40 as a rolling mill on the upstream side of the camera 64 in question and/or the F5 rolling mill stand 50 as a rolling mill on the downstream side of the camera 64, so as to operate the pair cross angle in the case of a pair cross rolling mill, or so as to perform a shift operation on the work rolls / intermediate rolls while predicting the center buckle / edge buckle in advance in the case of a work roll shift / intermediate roll shift rolling mill because it is difficult to make a shift during rolling.

Of the Chebyshev polynomial coefficients of the corrected Ec(x), the fourth order component $C_4c$ represents an index of a quarter buckle. Accordingly, one or more of the following operations are performed in order to correct the quarter buckle. A bending operation on the bending devices of the work rolls of the F4 rolling mill stand 40 as a rolling mill on the upstream side of the camera 64 in question and/or the F5 rolling mill stand 50 as a rolling mill on the downstream side of the camera 64 is performed, and further, in the case of a pair cross mill, the pair cross angle is operated together with the bending operation or singly. In a case of a six-high intermediate roll shift rolling mill, the quarter buckle is predicted in advance, and the intermediate rolls are shift-operated to an appropriate position. The fourth order component indicating the quarter buckle is normalized (into a target range so as to form a target strip shape) by outputting an operation command signal to the control device 82 so as to perform a bending operation and a pair cross angle operation. Incidentally, as for the quarter buckle, the smaller a roll diameter with respect to a roll length is, the more easily the roll is bent by the bending operation in an area of a roll width end portion, and thus the more easily the quarter buckle occurs. However, the normalization can be achieved by the above-described operations.

Effects of the present embodiment will next be described.

In the strip shape detecting device for the rolled metal strip 1, the strip shape detecting device including the cameras 61, 62, 63, and 64 installed so as to photograph images including an area in which band-shaped reflected light crossing in the widthwise direction appears on the surface of the metal strip 1 raised by the loopers 71, 72, 73, and 74 in the foregoing present embodiment, and the image processing computer 80 that determines the strip shape of the metal strip 1 on the basis of the images photographed by the cameras 61, 62, 63, and 64, the image processing computer 80 divides the area within the image into a plurality of zones in the widthwise direction of the metal strip 1, providing a value representing a widthwise position of each of the divided zones is referred to as a variable $(x)$, standardizes and converts the widthwise position within a widthwise range of the area in the image into a range of $-1 \leq x \leq 1$, applies index information representing magnitude corresponding to an amount of strip rolling elongation of the area in each of the zones to a Chebyshev polynomial $E(x) = C_0' + C_1' \times x + C_2' \times (2x^2 - 1) + C_4' \times (8x^4 - 8x^2 + 1)$ (where $-1 \leq x \leq 1$) representing a distribution $E(x)$ in each of the zones and having only zeroth order, first order, second order, and fourth order terms of $x$, determines coefficients ($C_0'$, $C_1'$, $C_2'$, and $C_4'$) of the Chebyshev polynomial, corrects $E(x)$ such that the coefficient $C_0'$ of a zeroth order component of the Chebyshev polynomial is constant at all times in $E(x)$ as $Ec(x) = C_0c + C_1c \cdot x + C_2c \cdot (2x^2 - 1) + C_4c \cdot (8x^4 - 8x^2 + 1)$, and transmits one or more of a first order corrective coefficient ($C_1c$), a second order corrective coefficient ($C_2c$), and a fourth order corrective coefficient ($C_4c$), the coefficients being information corresponding to a widthwise distribution of strip elongation in a rolling direction, as signals indicative of results of decision of the widthwise distribution of strip rolling elongation.

Such processing can correct the Chebyshev coefficients so as not to depend on changes in the angle of the loopers 71, 72, 73, and 74 and changes in the illumination luminance and the lightness in the surroundings. It is therefore possible to cancel out the effect of variations in the looper angle and cancel out the effect of variations in the luminance of the illumination and variations in the lightness in the surroundings, and assess only changes in the strip elongation distribution. Hence, more accurate strip rolling elongation detection can be performed as compared with related art.

In addition, the first order corrective coefficient ($C_1c$), the second order corrective coefficient ($C_2c$), and the fourth order corrective coefficient ($C_4c$) are $C_1c = C_1' C_0std/C_0'...(21)$, $C_2c = C_2' C_0std/C_0'...(22)$, and $C_4c = C_4' C_0std/C_0'... (23)$ where $C_0std$ is a constant, $C_0std$ is expressed as $C_0std = C_0't$ by using $C_0'$ represented at a certain specific time, i.e. Time = t, and $C_0'$ at Time = t is expressed as $C_0' = C_0't$. This correction makes it possible to assess only changes in a pure strip elongation distribution with higher accuracy even when there are variations in the looper angle and variations in the illuminance.

| | |
|---|---|
| 1 | Metal Strip |
| 1a, 1b | Reflecting Light Area |
| 10 | F1 Stand |
| 11,21,31,41,51 | Screw-Down Cylinder |
| 12,22,32,42,52 | Load Detector |
| 20 | F2 Stand |
| 30 | F3 Stand |
| 40 | F4 Stand |
| 50 | F5 Stand |
| 61,62,63,64 | Camera |
| 71,72,73,74 | Looper |
| 80 | Image Processing Computer (Image Processing Unit) |
| 82 | Controller |
| 85 | Monitor |
| 90 | Communication Line |
| 100 | Rolling Facility |

**EP 4 600 604 B1**

**Claims**

1.  A strip shape detecting device for a rolled metal strip, the strip shape detecting device comprising:

    a camera (61,62,63,64) installed so as to photograph an image including an area in which band-shaped reflected light crossing in a widthwise direction appears on a surface of the metal strip (1) raised by a looper (71,72,73,74); and
    an image processing unit (80) that determines a strip shape of the metal strip (1) on a basis of the image photographed by the camera (61,62,63,64), wherein
    the image processing unit (80) being configured to
    divide the area within the image into a plurality of zones in the widthwise direction of the metal strip (1), providing a value representing a widthwise position of each of the divided zones is referred to as a variable (x), standardize and convert the widthwise position within a widthwise range of the area in the image into a range of $-1 \leq x \leq 1$, apply index information representing magnitude corresponding to an amount of strip rolling elongation of the area in each of the zones to a Chebyshev polynomial $E(x) = C_0' + C_1' \times x + C_2' \times (2x^2 - 1) + C_4' \times (8x^4 - 8x^2 + 1)$ (where $-1 \leq x \leq 1$) representing a distribution $E(x)$ in each of the zones and having only zeroth order, first order, second order, and fourth order terms of x, determine coefficients ($C_0'$, $C_1'$, $C_2'$, and $C_4'$) of the Chebyshev polynomial, **characterised in that** the image processing unit is configured to correct the $E(x)$ such that a coefficient $C_0'$ of a zeroth order component of the Chebyshev polynomial is constant at all times in the $E(x)$ as

    $$Ec(x) = C_0c + C_1c \cdot x + C_2c \cdot (2x^2 - 1) + C_4c \cdot (8x^4 - 8x^2 + 1),$$

    and
    transmit one or more of a first order corrective coefficient ($C_1c$), a second order corrective coefficient ($C_2c$), and a fourth order corrective coefficient ($C_4c$), the corrective coefficients being information corresponding to a widthwise distribution of strip rolling elongation in a rolling direction, as signals indicative of results of decision of the widthwise distribution of strip rolling elongation.

2.  The strip shape detecting device for the metal strip according to claim 1, wherein

    the first order corrective coefficient ($C_1c$), the second order corrective coefficient ($C_2c$), and the fourth order corrective coefficient ($C_4c$) are expressed by following Equations:

    $$C_1c = C_1'C_0std/C_0'$$

    $$C_2c = C_2'C_0std/C_0'$$

    $$C_4c = C_4'C_0std/C_0'$$

    where $C_0std$ is a constant, $C_0std$ is expressed as $C_0std = C_0't$ by using $C_0'$ represented at a certain specific time, i.e. Time = t, and $C_0'$ at Time = t is $C_0' = C_0't$.

3.  A rolling mill comprising:

    the strip shape detecting device for the metal strip according to claim 1 or 2; and
    a control device,
    the control device being configured to transmit one or more operation signals related to a leveling amount, a bending force, or a pair cross angle of the rolling mill on a basis of the signals indicative of the decision results.

4.  A strip shape detecting method for a rolled metal strip, the strip shape detecting method comprising:

    a photographing step of photographing, by a camera (61,62,63,64), an image including an area in which band-shaped reflected light crossing in a widthwise direction of a surface of the metal strip (1) raised by a looper (71,72,73,74) appears; and
    an image processing step of determining a strip shape of the metal strip (1) on a basis of the image photographed in the photographing step, wherein
    the image processing step being configured to

12

divide the area within the image into a plurality of zones in the widthwise direction of the metal strip (1), providing a value representing a widthwise position of each of the divided zones is referred to as a variable (x), standardize and convert the widthwise position within a widthwise range of the area in the image into a range of $-1 \leq x \leq 1$, apply index information representing magnitude corresponding to an amount of strip rolling elongation of the area in each of the zones to a Chebyshev polynomial $E(x) = C_0' + C_1' \times x + C_2' \times (2x^2 - 1) + C_4' \times (8x^4 - 8x^2 + 1)$ (where $-1 \leq x \leq 1$) representing a distribution $E(x)$ in each of the zones and having only zeroth order, first order, second order, and fourth order terms of x, determine coefficients ($C_0'$, $C_1'$, $C_2'$, and $C_4'$) of the Chebyshev polynomial, **characterised in that** the image processing step is configured to correct the $E(x)$ such that a coefficient $C_0'$ of a zeroth order component of the Chebyshev polynomial is constant at all times in the $E(x)$ as

$$Ec(x) = C_0c + C_1c \cdot x + C_2c \cdot (2x^2 - 1) + C_4c \cdot (8x^4 - 8x^2 + 1),$$

and

transmit one or more of a first order corrective coefficient ($C_1c$), a second order corrective coefficient ($C_2c$), and a fourth order corrective coefficient ($C_4c$), the corrective coefficients being information corresponding to a widthwise distribution of strip rolling elongation in a rolling direction, as signals indicative of results of decision of the widthwise distribution of strip rolling elongation.

5. The strip shape detecting method for the metal strip according to claim 4, wherein

in the image processing step,
the first order corrective coefficient (C1c), the second order corrective coefficient (C2c), and the fourth order corrective coefficient (C4c) are expressed by following Equations:

$$\mathtt{C_1c \ = \ C_1'C_0std/C_0'}$$

$$\mathtt{C_2c \ = \ C_2'C_0std/C_0'}$$

$$\mathtt{C_4c \ = \ C_4'C_0std/C_0'}$$

where $C_0std$ is a constant, $C_0std$ is expressed as $C_0std = C_0't$ by using $C_0'$ represented at a certain specific time, i.e. Time = t, and $C_0'$ at Time = t is $C_0' = C_0't$.

**Patentansprüche**

1. Bandformdetektionsvorrichtung für ein gewalztes Metallband, wobei die Bandformdetektionsvorrichtung umfasst:

eine Kamera (61, 62, 63, 64), die so installiert ist, dass sie ein Bild fotografiert, das einen Bereich enthält, in dem bandförmiges reflektiertes Licht, das in einer Breitenrichtung kreuzt, auf einer Oberfläche des Metallbands (1) erscheint, die von einem Greifer (71, 72, 73, 74) angehoben wird; und
eine Bildverarbeitungseinheit (80), die eine Bandform des Metallbands (1) auf der Grundlage des von der Kamera (61, 62, 63, 64) fotografierten Bildes bestimmt, wobei
die Bildverarbeitungseinheit (80) dazu eingerichtet ist, den Bereich innerhalb des Bildes in mehrere Zonen in der Breitenrichtung des Metallbands (1) zu unterteilen, vorausgesetzt, dass ein Wert, der eine Position in Breitenrichtung jeder der unterteilten Zonen darstellt, als eine Variable (x) bezeichnet wird, die Position in Breitenrichtung innerhalb eines Intervalls in Breitenrichtung des Bereichs im Bild in ein Intervall von $-1 \leq x \leq 1$ zu standardisieren und umzuwandeln, Indexinformationen, die eine Größe entsprechend eines Ausmaßes an Bandwalzdehnung des Bereichs in jeder der Zonen darstellen, auf ein Tschebysheff-Polynom $E(x) = C_0' + C_1' \times x + C_2' \times (2x^2 - 1) + C_4' \times (8x^4 - 8x^2 + 1)$ (wobei $-1 \leq x \leq 1$) anzuwenden, das eine Verteilung $E(x)$ in jeder der Zonen darstellt und nur Terme nullter Ordnung, erster Ordnung, zweiter Ordnung und vierter Ordnung von x aufweist, Koeffizienten ($C_0'$, $C_1'$, $C_2'$ und $C_4'$) des Tschebysheff-Polynoms zu bestimmen, **gekennzeichnet dadurch, dass** die Bildverarbeitungseinheit dazu eingerichtet ist, $E(x)$ so zu korrigieren, dass ein Koeffizient Co' einer Komponente nullter Ordnung des Tschebysheff-Polynoms zu allen Zeiten in $E(x)$ konstant ist als

$$Ec(x) = C_0c + C_1c \cdot x + C_2c \cdot (2x^2 - 1) + C_4c \cdot (8x^4 - 8x^2 + 1),$$

und

einen oder mehrere von einem Korrekturkoeffizienten erster Ordnung ($C_1c$), einem Korrekturkoeffizienten zweiter Ordnung ($C_2c$) und einem Korrekturkoeffizienten vierter Ordnung ($C_4c$), wobei die Korrekturkoeffizienten Informationen sind, die einer Verteilung der Bandwalzdehnung in Breitenrichtung in einer Walzrichtung entsprechen, als Signale, die Ergebnisse der Entscheidung über die Verteilung der Bandwalzdehnung in Breitenrichtung angeben, zu übertragen.

**2.** Bandformdetektionsvorrichtung für das Metallband nach Anspruch 1, wobei

der Korrekturkoeffizient erster Ordnung ($C_1c$), der Korrekturkoeffizient zweiter Ordnung ($C_2c$) und der Korrekturkoeffizient vierter Ordnung ($C_4c$) durch folgende Gleichungen ausgedrückt werden:

$$C_1c = C_1' \, C_0std \, / \, C_0'$$

$$C_2c = C_2' \, C_0std \, / \, C_0'$$

$$C_4c = C_4' \, C_0std \, / \, C_0'$$

wobei $C_0std$ eine Konstante ist, $C_0std$ als $C_0std = C_0'$ t unter Verwendung von $C_0'$ ausgedrückt wird, das zu einer bestimmten spezifischen Zeit dargestellt wird, d.h. Zeit=t, und $C_0'$ bei Zeit=t $C_0' = C_0'$ t ist.

**3.** Walzwerk umfassend:

die Bandformdetektionsvorrichtung für das Metallband nach Anspruch 1 oder 2; und
eine Steuerungsvorrichtung,
wobei die Steuerungsvorrichtung dazu eingerichtet ist, ein oder mehrere Betriebssignale bezüglich eines Nivellierungsbetrags, einer Biegekraft oder eines Paars von Kreuzwinkeln des Walzwerks auf der Grundlage der Signale zu übertragen, die die Entscheidungsergebnisse angeben.

**4.** Bandformerfassungsverfahren für ein gewalztes Metallband, wobei das Bandformerfassungsverfahren umfasst:

einen Fotografierschritt des Fotografierens, durch eine Kamera (61, 62, 63, 64), eines Bildes, das einen Bereich enthält, in dem bandförmiges reflektiertes Licht, das in einer Breitenrichtung einer Oberfläche des Metallbands (1) kreuzt, die von einem Greifer (71, 72, 73, 74) angehoben wird, erscheint; und
einen Bildverarbeitungsschritt des Bestimmens einer Bandform des Metallbands (1) auf der Grundlage des im Fotografierschritt fotografierten Bildes, wobei
der Bildverarbeitungsschritt dazu eingerichtet ist,
den Bereich innerhalb des Bildes in mehrere Zonen in der Breitenrichtung des Metallbands (1) zu unterteilen, vorausgesetzt, dass ein Wert, der eine Position in Breitenrichtung jeder der unterteilten Zonen darstellt, als eine Variable (x) bezeichnet wird, die Position in Breitenrichtung innerhalb eines Intervalls in Breitenrichtung des Bereichs im Bild in ein Bereich von $-1 \leq x \leq 1$ zu standardisieren und umzuwandeln, Indexinformation, die eine Größe entsprechend eines Ausmaßes der Bandwalzdehnung des Bereichs in jeder der Zonen darstellen, auf ein Tschebyscheff-Polynom $E(x) = C_0' + C_1' \times x + C_2' \times (2x^2 - 1) + C_4' \times (8x^4 - 8x^2 + 1)$ (wobei $-1 \leq x \leq 1$) anzuwenden, das eine Verteilung $E(x)$ in jeder der Zonen darstellt und nur Terme nullter Ordnung, erster Ordnung, zweiter Ordnung und vierter Ordnung von x aufweist, Koeffizienten ($C_0'$, $C_1'$, $C_2'$ und $C_4'$) des Tschebyscheff-Polynoms zu bestimmen,
**gekennzeichnet dadurch, dass** der Bildverarbeitungsschritt dazu eingerichtet ist,
$E(x)$ so zu korrigieren, dass ein Koeffizient $C_0'$ einer Komponente nullter Ordnung des Tschebyscheff-Polynoms zu allen Zeiten in dem $E(x)$ konstant ist als

$$Ec(x) = C_0c + C_1c \cdot x + C_2c \cdot (2x^2 - 1) + C_4c \cdot (8x^4 - 8x^2 + 1),$$

und
einen oder mehrere von einem Korrekturkoeffizienten erster Ordnung ($C_1c$), einem Korrekturkoeffizienten

zweiter Ordnung ($C_2$c) und einem Korrekturkoeffizienten vierter Ordnung ($C_4$c), wobei die Korrekturkoeffizienten Informationen sind, die einer Verteilung der Bandwalzdehnung in Breitenrichtung in einer Walzrichtung entsprechen, als Signale, die Ergebnisse der Entscheidung über die Verteilung der Bandwalzdehnung in Breitenrichtung angeben, zu übertragen.

**5.** Bandformerfassungsverfahren für das Metallband nach Anspruch 4, wobei

im Bildverarbeitungsschritt
der Korrekturkoeffizient erster Ordnung ($C_1$c), der Korrekturkoeffizient zweiter Ordnung ($C_2$c) und der Korrekturkoeffizient vierter Ordnung ($C_4$c) durch folgende Gleichungen ausgedrückt werden:

$$C_1c = C_1\text{'} \ C_0\text{std} \ / \ C_0\text{'}$$

$$C_2c = C_2\text{'} \ C_0\text{std} \ / \ C_0\text{'}$$

$$C_4c = C_4\text{'} \ C_0\text{std} \ / \ C_0\text{'}$$

wobei $C_0$std eine Konstante ist, $C_0$std als $C_0$std = $C_0$' t unter Verwendung von $C_0$' ausgedrückt wird, das zu einer bestimmten spezifischen Zeit dargestellt wird, d.h., Zeit=t und $C_0$' bei Zeit=t $C_0$' = $C_0$' t ist.

## Revendications

**1.** Dispositif de détection de forme de bande pour une bande métallique laminée, le dispositif de détection de forme de bande comprenant :

une caméra (61, 62, 63, 64) installée de façon à photographier une image incluant une superficie dans laquelle une lumière réfléchie en forme de bande traversant dans un sens de la largeur apparaît sur une surface de la bande métallique (1) soulevée par un boucleur (71, 72, 73, 74) ; et
une unité (80) de traitement d'image qui détermine une forme de bande de la bande métallique (1) sur une base de l'image photographiée par la caméra (61, 62, 63, 64), dans lequel
l'unité (80) de traitement d'image étant configurée pour
diviser la superficie à l'intérieur de l'image en une pluralité de zones dans le sens de la largeur de la bande métallique (1), étant donné qu'une valeur représentant une position dans le sens de la largeur de chacune des zones divisées est référencée comme une variable (x), normaliser et convertir la position dans le sens de la largeur à l'intérieur d'une plage dans le sens de la largeur de la superficie dans l'image en une plage de $-1 \leq x \leq 1$, appliquer une information d'indice représentant une grandeur correspondant à une quantité d'allongement de laminage de bande de la superficie dans chacune des zones à un polynôme de Tchebychev $E(x) = C_0\text{'} + C_1\text{'} \times x + C_2\text{'} \times (2x^2 - 1) + C_4\text{'} \times (8x^4 - 8x^2 +1)$ (où $-1 \leq x \leq 1$) représentant une distribution E(x) dans chacune des zones et n'ayant que des termes d'ordre zéro, de premier ordre, de deuxième ordre, et de quatrième ordre de x, déterminer des coefficients ($C_0\text{'}$, $C_1\text{'}$, $C_2\text{'}$, et $C_4\text{'}$) du polynôme de Tchebychev,
**caractérisé en ce que** l'unité de traitement d'image est configurée pour
corriger le E(x) de telle façon qu'un coefficient $C_0\text{'}$ d'un composant d'ordre zéro du polynôme de Tchebychev est constant à tous moments dans le E(x) comme

$$Ec(x) = C_{0c} + C_1c{\cdot}x + C_2c{\cdot}(2x^2 - 1) + C_4c{\cdot}(8x^4 - 8x^2 +1)$$

et
transmettre un ou plusieurs parmi un coefficient correctif de premier ordre ($C_1$c), un coefficient correctif de deuxième ordre ($C_2$c), et un coefficient correctif de quatrième ordre ($C_4$c), les coefficients correctifs étant une information correspondant à une distribution dans le sens de la largeur d'un allongement de laminage de bande dans un sens de laminage, comme des signaux indicateurs de résultats de décision de la distribution dans le sens de la largeur d'un allongement de laminage de bande.

**2.** Dispositif de détection de forme de bande pour la bande métallique selon la revendication 1, dans lequel

le coefficient correctif de premier ordre ($C_1c$), le coefficient correctif de deuxième ordre ($C_2c$), et le coefficient correctif de quatrième ordre ($C_4c$) sont exprimés par les Équations suivantes :

$$C_1c = C_1{}'C_0std/C_0{}'$$

$$C_2c = C_2{}'C_0std/C_0{}'$$

$$C_4c = C_4{}'C_0std/C_0{}'$$

où $C_0std$ est une constante, $C_0std$ est exprimé comme $C_0std = C_0{}'t$ en utilisant $C_0{}'$ représenté à un certain temps spécifique, à savoir Temps = t, et $C_0{}'$ au Temps = t est $C_0{}' = C_0{}'t$.

3. Laminoir comprenant :

le dispositif de détection de forme de bande pour la bande métallique selon la revendication 1 ou 2 ; et
un dispositif de commande,
le dispositif de commande étant configuré pour transmettre un ou plusieurs signaux d'opération se rapportant à une quantité de mise de niveau, une force de flexion, ou un angle de croisement de paire du laminoir sur une base des signaux indicateurs des résultats de décision.

4. Procédé de détection de forme de bande pour une bande métallique laminée, le procédé de détection de forme de bande comprenant :

une étape de photographie pour photographier, par une caméra (61, 62, 63, 64), une image incluant une superficie dans laquelle une lumière réfléchie en forme de bande traversant dans un sens de la largeur d'une surface de la bande métallique (1) soulevée par un boucleur (71, 72, 73, 74) apparaît ; et
une étape de traitement d'image pour déterminer une forme de bande de la bande métallique (1) sur une base de l'image photographiée à l'étape de photographie, dans lequel
l'étape de traitement d'image étant configurée pour
diviser la superficie à l'intérieur de l'image en une pluralité de zones dans le sens de la largeur de la bande métallique (1), étant donné qu'une valeur représentant une position dans le sens de la largeur de chacune des zones divisées est référencée comme une variable ($x$), normaliser et convertir la position dans le sens de la largeur à l'intérieur d'une plage dans le sens de la largeur de la superficie dans l'image en une plage de $-1 \leq x \leq 1$, appliquer une information d'indice représentant une grandeur correspondant à une quantité d'allongement de laminage de bande de la superficie dans chacune des zones à un polynôme de Tchebychev $E(x) = C_0{}' + C_1{}' \times x + C_2{}' \times (2x^2 - 1) + C_4{}' \times (8x^4 - 8x^2 + 1)$ (où $-1 \leq x \leq 1$) représentant une distribution $E(x)$ dans chacune des zones et n'ayant que des termes d'ordre zéro, de premier ordre, de deuxième ordre, et de quatrième ordre de $x$, déterminer des coefficients ($C_0{}'$, $C_1{}'$, $C_2{}'$, et $C_4{}'$) du polynôme de Tchebychev,
**caractérisé en ce que** l'étape de traitement d'image est configurée pour
corriger le $E(x)$ de telle façon qu'un coefficient $C_0{}'$ d'un composant d'ordre zéro du polynôme de Tchebychev est constant à tous moments dans le $E(x)$ comme

$$Ec(x) = C_{0c} + C_1c \cdot x + C_2c \cdot (2x^2 - 1) + C_4c \cdot (8x^4 - 8x^2 + 1)$$

et
transmettre un ou plusieurs parmi un coefficient correctif de premier ordre ($C_1c$), un coefficient correctif de deuxième ordre ($C_2c$), et un coefficient correctif de quatrième ordre ($C_4c$), les coefficients correctifs étant une information correspondant à une distribution dans le sens de la largeur d'un allongement de laminage de bande dans un sens de laminage, comme des signaux indicateurs de résultats de décision de la distribution dans le sens de la largeur d'un allongement de laminage de bande.

5. Procédé de détection de forme de bande pour la bande métallique laminée selon la revendication 4, dans lequel

à l'étape de traitement d'image,
le coefficient correctif de premier ordre ($C_1c$), le coefficient correctif de deuxième ordre ($C_2c$), et le coefficient correctif de quatrième ordre ($C_4c$) sont exprimés par les Équations suivantes :

$$C_1c = C_1{}'C_0std/C_0{}'$$

$$C_2c = C_2{}'C_0std/C_0{}'$$

$$C_4c = C_4{}'C_0std/C_0{}'$$

où $C_0std$ est une constante, $C_0std$ est exprimé comme $C_0std = C_0{}'t$ en utilisant $C_0{}'$ représenté à un certain temps spécifique, à savoir Temps = t, et $C_0{}'$ au Temps = t est $C_0{}' = C_0{}'t$.

EP 4 600 604 B1

Fig 1

# Fig 2

ROLLING
DIRECTION

1A

1

71,72,73,74

Fig 3

ROLLING
DIRECTION

1B

1

71,72,73,74

## Fig 4

AVERAGE LENGTH Laj WITHIN DIVIDED ZONE IN REFLECTING LIGHT AREA (DIVISION j = 1~5)

AVERAGE LENGTH Laj WITHIN DIVIDED ZONE

WIDTHWISE DIVISION

UPSTREAM SIDE BOUNDARY LINE

DOWNSTREAM SIDE BOUNDARY LINE

WIDTHWISE DIRECTION X

DIVISION 1

DIVISION 2

DIVISION 3

DIVISION 4

DIVISION 5

ROLLING DIRECTION

WIDTHWISE POSITION

-1.0
-0.5
0.0
0.5
1.0

-5          0          5

CHEBYSHEV POLYNOMIAL
(FIRST ORDER COMPONENT GRAPH)

CHEBYSHEV POLYNOMIAL FIRST ORDER COMPONENT OF Laj

WIDTHWISE POSITION

-0.5
0.0
0.5
1.0

-4     -2     0     2     4

CHEBYSHEV POLYNOMIAL
(SECOND ORDER COMPONENT GRAPH)

CHEBYSHEV POLYNOMIAL SECOND ORDER COMPONENT OF Laj

WIDTHWISE POSITION

-1.0
-0.5
0.0
0.5
1.0

-1.0    -0.5    0.0    0.5    1.0

CHEBYSHEV POLYNOMIAL
(FOURTH ORDER COMPONENT GRAPH)

CHEBYSHEV POLYNOMIAL FOURTH ORDER COMPONENT OF Laj

Fig 5

DIVIDED ZONE IN
REFRECTING LIGHT AREA

DRIVE SIDE (DS)

x=-1

x1 — E1

x2 — E2

x3 — E3

x4 — E4 → INDEX INFORMATION

x5 — E5

x6 — E6

x7 — E7 WORK SIDE (WS)

x=1

STRIP WIDTH W

X

EP 4 600 604 B1

# Fig 6

(h:HIGH、θ:LARGE、w:NALLOW)

# Fig 7

1

1A,1B

w

θ

h

（h：LOW、θ：SMALL、w：WIDE）  71,72,73,74

## Fig 8

(w：WIDE)

Fig 9

1A,1B

1

w

71,72,73,74

（w：NALLOW）

# Fig 10

85

ZEROTH ORDER COMPONENT
$(C_{0c})$

FIRST ORDER COMPONENT
$(C_{1c}x)$

SECOND ORDER COMPONENT
$(C_{2c}(2x^2-1))$

FOURTH ORDER COMPONENT
$(C_{4c}(8x^4-8x^2+1))$

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6808888 B

- JP 7130350 B